# EUROPEAN PATENT APPLICATION

(11) **EP 2 090 503 A1**
(43) Date of publication of application: **19.08.2009**
(21) Application number: 09001022.4
(22) Date of filing: 26.01.2009
(51) Int. Cl.: B62J 25/00

(54) **Auxiliary device of motorcycle footrest**

(30) Priority: 15.02.2008 TW 97202757 U
(71) Applicant: Kwang Yang Motor Co., Ltd., Sanmin District Kaohsiung City 807 (TW)
(72) Inventor: Ko, Shih-Chih, Cambridge CB2 1FD (GB); Lee, Hsin-Hsing, Cambridge CB2 1FD (GB)
(74) Representative: Horak, Michael

(57) **Abstract**

The motorcycle (2) includes a frame (3) that includes a front tube (32), a downward-extending tube section (34) extending rearward from the front tube (32), a horizontal tube section (35) extending rearward from the downward-extending tube section to opposite sides of the motorcycle, an upward-extending tube section (36) extending rearward from the horizontal tube section (35), a rear frame (37) extending rearward from the upward-extending tube section (36), a support bracket (361) mounted to the upward-extending tube section (36), and a footrest (83) mounted to the support bracket (361). An auxiliary device (9) is arranged outboard the footrest (83). Said device (9) includes a body (91) that is fixed to the support bracket by a fastener (94), whereby width of the footrest is increased to improve comfort of a passenger placing his or her foot thereon and to effectively reduce the costs for replacing a footrest that is damaged due to collision.

## Description

### (a) Technical Field of the Invention

The present invention generally relates to a footrest of a motorcycle, and particularly to an auxiliary device arranged outboard the motorcycle footrest for the purposes of increasing the width of the footrest.

### (b) Description of the Prior Art

A modem and well developed commercial area requires efficiency and convenience, which are realized through efficient transportation. Besides public transportation, private transportation devices are often employed for such purposes. Among the private transportation devices, motorcycles are an efficient and convenient measure for short-distance and light-load transportation and no other vehicle is a match in this respect. Thus, motorcycles are popularly used in various areas and are of a huge market in the world.

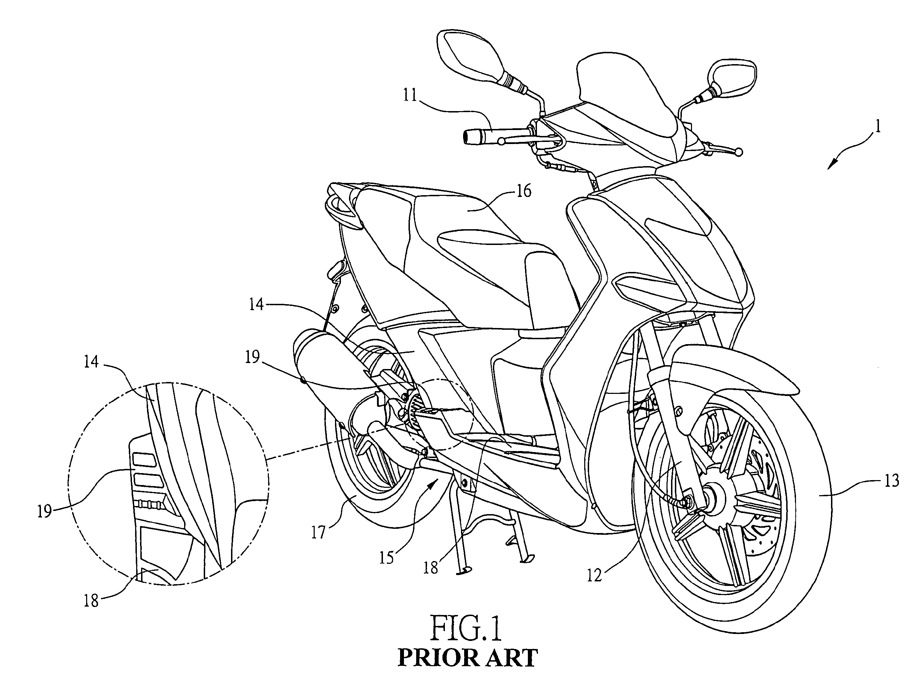

A conventional motorcycle 1, as shown in FIG 1, comprises a steering handlebar 11 arranged at a front end thereof. A front shock absorber 12 is mounted below the handlebar 11 and a front wheel 13 is coupled to the front shock absorber 12. The motorcycle 1 is partially enclosed by a cover 14. A power unit 15 is arranged in a lower portion of the motorcycle 1. A seat 16 is arranged above the power unit 15 for supporting a rider and/or a passenger sitting thereon. The power unit 15 is coupled to a rear wheel 17.

To facilitate a passenger to sit on the motorcycle 1, pillion footrests 19 are provided on opposite sides of the motorcycle body and are integrally formed with a front footrest 18 and projecting outward. The footrests 19 may support the passenger feet placed thereon. However, since everybody has a different body size and so are the feet, it often happens that the footrests 19 are undersized to a passenger feet and thus, the passenger feet may be supported in a partially overhanging condition. Further, since the footrests 19 are projecting outward beyond opposite sides of the motorcycle body, when the motorcycle 1 overturns or is parked in a very crowded motorcycle parking zone, the outward projecting footrests 19 are susceptible to damage due to collision. And, it is even worse that the damaged footrests 19 must be replaced together with the front footrest 18. This makes the maintenance and repairing costs of the motorcycle 1 increased.

In view of the above drawbacks of the conventional motorcycle, it is a challenge of the motorcycle industry to increase the width of the pillion footrest and to reduce the maintaining and replacing costs of the pillion footrest.

### SUMMARY OF THE INVENTION

The primary technical solution adopted in the present invention is to provide an auxiliary device of a motorcycle footrest, wherein the motorcycle comprises a frame that comprises a front tube, a downward-extending tube section extending rearward from the front tube, a horizontal tube section extending rearward from the downward-extending tube section to opposite sides of the motorcycle, an upward-extending tube section extending rearward from the horizontal tube section, a rear frame extending rearward from the upward-extending tube section, a support bracket mounted to the upward-extending tube section, and a footrest mounted to the support bracket, wherein the auxiliary device is arranged outboard the footrest, and the auxiliary device comprises a body that is fixed to the support bracket by a fastener from an outer side, whereby the width of the footrest is increased to improve comfort of a passenger placing his or her foot thereon and to effectively reduce the costs for replacing a footrest that is damaged due to collision.

Another technical solution adopted in the present invention is to provide an auxiliary device of a motorcycle footrest, wherein the motorcycle comprises a frame that comprises a front tube, a downward-extending tube section extending rearward from the front tube, a horizontal tube section extending rearward from the downward-extending tube section to opposite sides of the motorcycle, an upward-extending tube section extending rearward from the horizontal tube section, a rear frame extending rearward from the upward-extending tube section, a support bracket mounted to the upward-extending tube section, and a footrest mounted to the support bracket, and the auxiliary device is arranged outboard the footrest. The auxiliary device comprises a body and the body is provided with a connection piece in which an elongate adjustment slot is defined. The adjustment slot has an inner wall that forms positioning mechanisms, whereby by having a fastener extending through the adjustment slot of the connection piece and tightened to the support bracket, the body of the auxiliary device is made movable outward to be selectively set at different length. Thus, the width of the footrest can be properly set to improve comfort of a passenger placing his or her foot thereon and to effectively reduce the costs for replacing a footrest that is damaged due to collision.

The foregoing objective and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG 1 is a perspective view of a conventional motorcycle.
FIG 2 is a side elevational view of a motorcycle constructed in accordance with the present invention.
FIG 3 is a perspective view of the motorcycle of the present invention.
FIG 4 is an exploded view of an auxiliary device constructed in accordance with the present invention.
FIG 5 is an exploded view of an auxiliary device constructed in accordance with another embodiment of the present invention.
FIGS. 6 and 7 schematically illustrate the operation of the auxiliary device of FIG. 5.

### DETAILED DESCRIPTION OF THE PREFERRED EMBODIMENTS

The following descriptions are exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

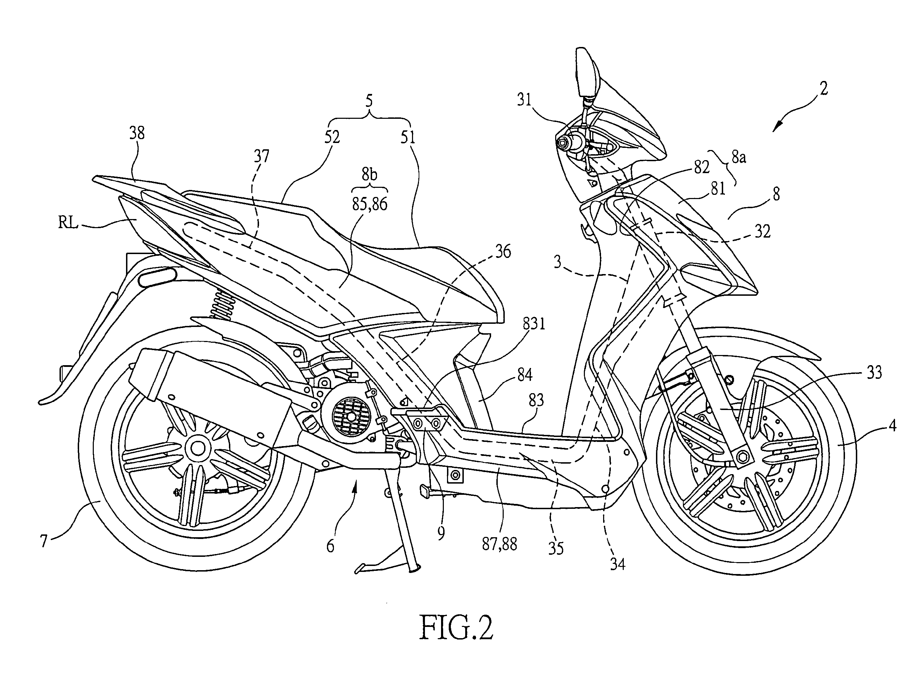

With reference to the drawings and in particular to FIG 2, a motorcycle constructed in accordance with the present invention, generally designated with reference numeral 2, comprises: a frame 3, a front wheel 4, a seat 5, a power unit 6, a rear wheel 7, and a frame cover 8.

The frame 3 has a front end to which a steering handlebar 31 is rotatably mounted. The handlebar 31 has a lower end to which a front tube 32 is mounted. The front tube 32 has a lower end to which a front shock absorber 33 is rotatably mounted. The front shock absorber 33 is coupled to the front wheel 4. The front tube 32 is housed in the frame cover 8. The frame 3 comprises a downward-extending tube section 34 extending from the front tube 32 toward a rear side of the motorcycle body. A horizontal tube section 35 extends from the downward-extending tube section 34 to two side portions in the direction toward the rear side of the motorcycle body for supporting a front footrest 83. An upward-extending tube section 36 extends from the horizontal tube section 35 toward the rear side of the motorcycle body. A rear frame 37 extends rearward from the upward-extending tube section 36 and the rear frame 37 supports a rear cargo rack 38.

The seat 5 is arranged atop the frame 3 to support a rider sitting thereon. The seat 5 includes a rider zone 51 for supporting the rider sitting thereon and a passenger zone 52 for supporting a passenger sitting thereon. The power unit 6 suspends on the upward-extending tube section 36 and is coupled to the rear wheel 7.

The frame cover 8 comprises a front covering portion 8a that is located in a front portion of the motorcycle 2 and a side covering section 8b. The front covering portion 8a comprises a front panel 81 and a knee shield 82. The knee shield 81 is connected, at a lower portion thereof, the front footrest 83 and a central covering board 84 opposes the knee shield 81. The side covering portion 8b comprises a left covering member 85 and a right covering member 86 that cover opposite sides of the motorcycle 2. Side strips 87, 88 are connected to opposite sides of a bottom of the front footrest 83. Rear ends of the left and right covering members 85, 86 are connected to a taillight assembly RL.

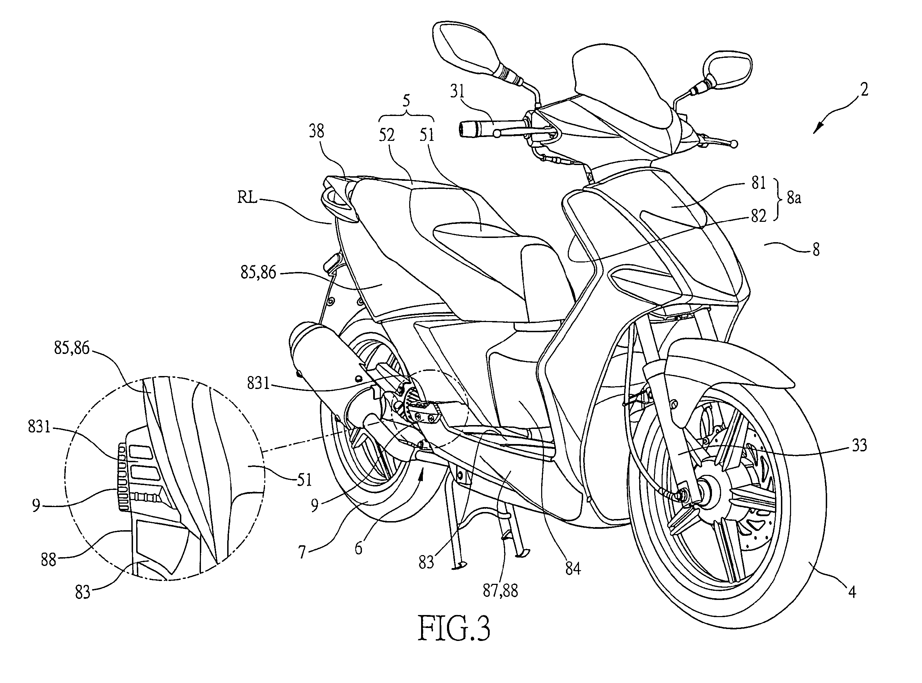

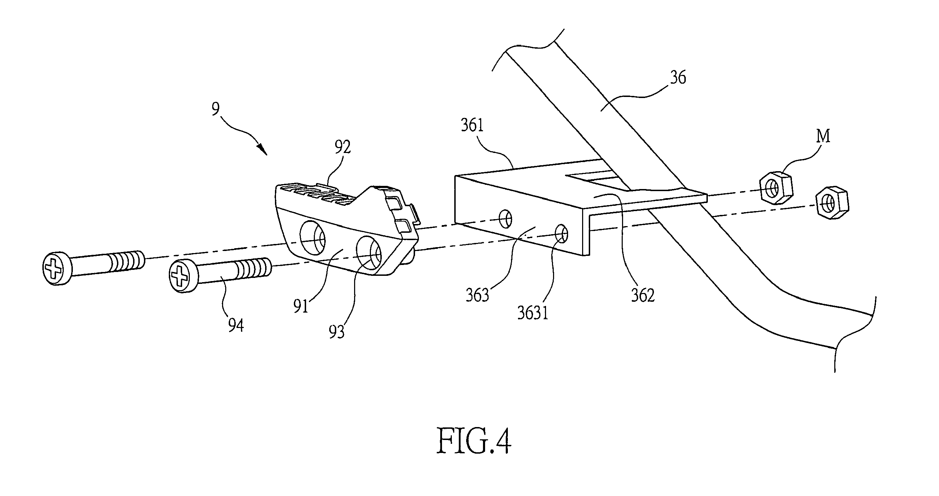

Referring to FIGS. 3 and 4, the front footrest 83 of the present invention is extended rearward to form integral pillion footrests 831 on opposite sides of the motorcycle body for supporting feet of the passenger. The upward-extending tube section 36 of the frame 3 is provided with a support bracket 361 that has a horizontal face 362 and a vertical face 363. The mounting holes 3631 are defined through the vertical face 363. The support bracket 361 functions to provide the corresponding pillion footrest 831 with a secured support. An auxiliary device 9 is arranged outboard the pillion footrest 831. The auxiliary device 9 comprises a body 91 that has an edge forming a hook 92. The body 91 has an outer surface in which through holes 93 are defined for receiving the extension of fasteners 94. An example of the fastener 94 is a threaded bolt. The body 91 of the auxiliary device 9 is secured by inserting the fasteners 94 through the through holes 93 defined in the outer surface of the body 91 to extend through the vertical face 363 of the support bracket 361 and then tightened by nuts M. The hook 92 formed on the edge f the body 91 can be set engaging with a slot that is defined in the side strip 87, 88 located below the motorcycle body to enhance the coupling between the body 91 and the side strip 87, 88.

The present invention uses the auxiliary device 9 that is arranged outboard the pillion footrest 831 to increase the width of the pillion footrest 831 and thus the comfort of foot resting for the passenger. The body 91 of the auxiliary device 9 provides protection of the pillion footrest 831 against damage that may be caused by overturning of the motorcycle 2, and thus maintenance and repairing costs of the pillion footrest 831 can be effectively reduced.

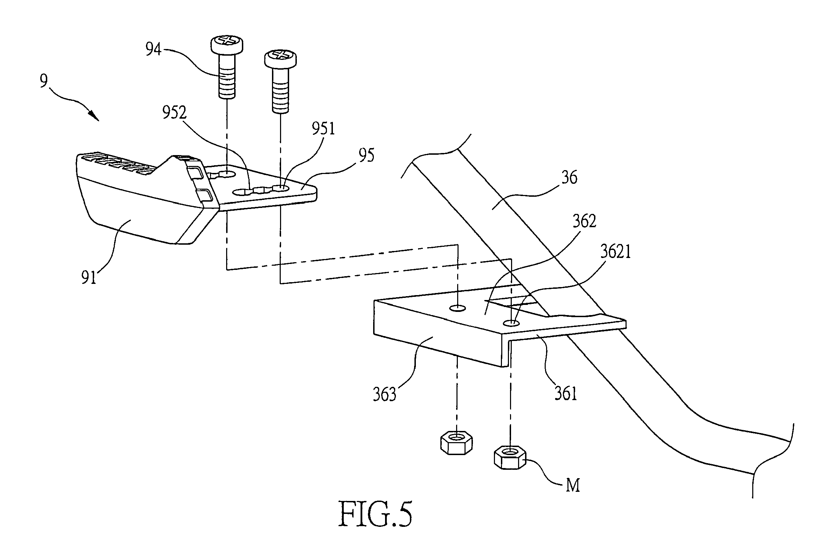

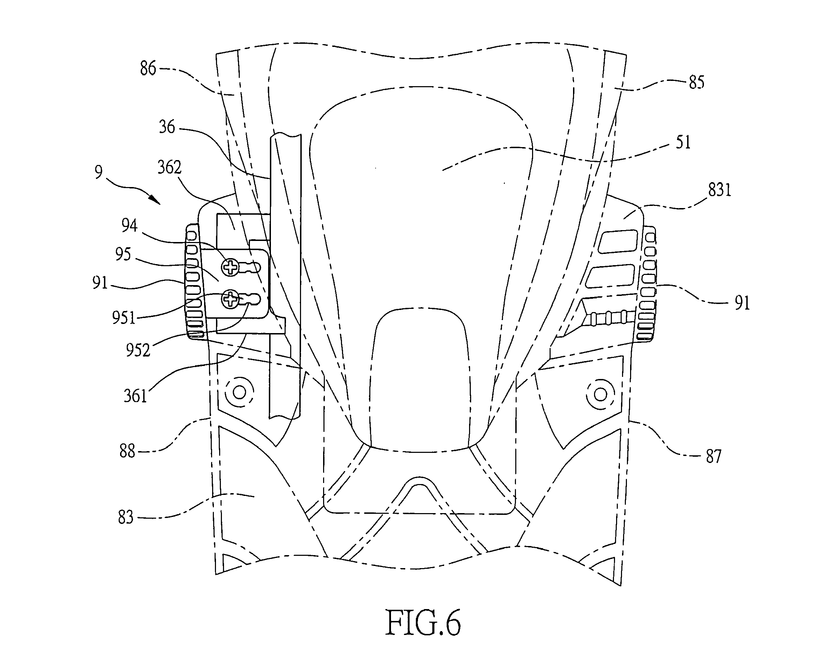

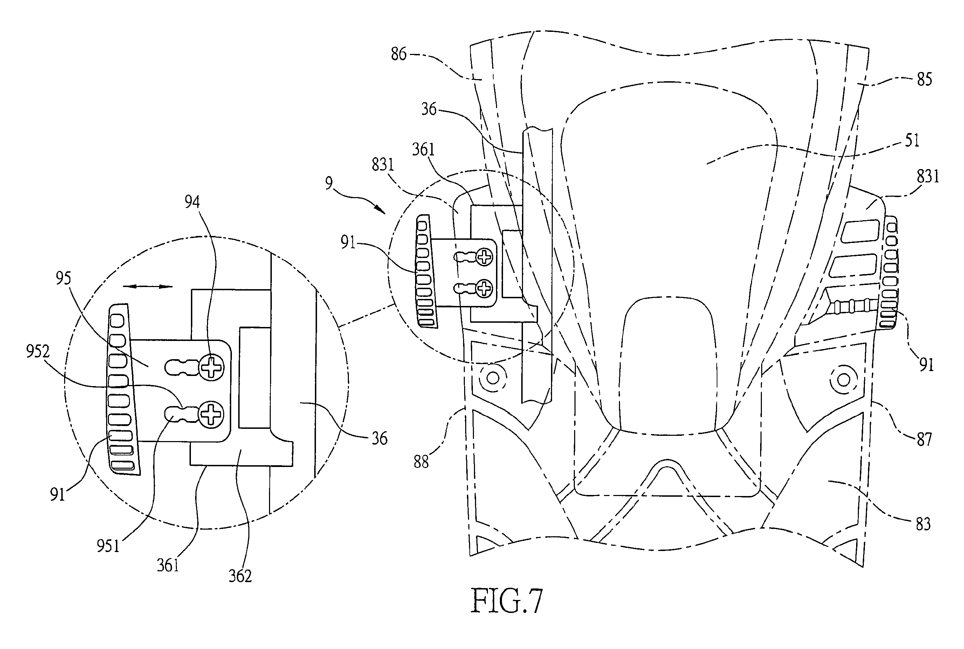

Referring to FIGS. 5 and 6, the body 91 of the auxiliary device 9 can be selectively extended at an inner side thereof to form a connection piece 95. The connection piece 95 defined therein elongate adjustment slots 951. Each adjustment slot 951 has an inner wall forming a plurality of positioning mechanisms 952. By having the fastener 94 extending through the adjustment slot 951 of the connection piece 95 and tightened to a corresponding mounting hole 3621 defined in the horizontal face 362 of the support bracket 361, the auxiliary device 9 is securely fixed outboard the pillion footrest 831. The fastener 94 can be for example a pin. Further referring to FIG 7, the auxiliary device 9 can be moved outward by sliding the connection piece 95 to outward withdraw the auxiliary device 9. The positioning mechanisms 952 formed in the inner wall of the adjustment slot 951 can selectively engage and thus position the fastener 94 to thereby set the body 91 at different extended length. In this way, a user may adjust the width of the pillion footrest 831 to a proper size to enhance the comfort of the user feet and reduce the expense that might be needed in replacing a damaged pillion footrest 831 caused by collision.

The effectiveness of the present invention is that an auxiliary device 9 is set outboard the pillion footrest 831 of the motorcycle 2 to effectively increase the width of the pillion footrest 831 for enhancing comfort of a passenger sitting on the motorcycle. The auxiliary device 9 also offers protection of the pillion footrest 831 of the motorcycle 2 against damage caused by collision or overturn of the motorcycle 2 and thus effectively reducing the costs for maintaining and repairing the pillion footrest 831.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the spirit of the present invention.

## Claims

1. An auxiliary device of a motorcycle footrest, the motorcycle comprising a frame that comprises a front tube, a downward-extending tube section extending rearward from the front tube, a horizontal tube section extending rearward from the downward-extending tube section to opposite sides of the motorcycle, an upward-extending tube section extending rearward from the horizontal tube section, a support bracket mounted to the upward-extending tube section, and a footrest mounted to the support bracket, wherein the auxiliary device is arranged outboard the footrest, the auxiliary device comprising a body that is fixed to the support bracket by a fastener, whereby width of the footrest is increased.

2. The auxiliary device according to claim 1, wherein the body has an edge forming a hook.

3. The auxiliary device according to claim 1, wherein the fastener comprises a bolt.

4. The auxiliary device according to claim 1, wherein the body of the auxiliary device comprises a connection piece.

5. The auxiliary device according to claim 4, wherein the connection piece forming an adjustment slot for fixing the connection piece to the support bracket with the fastener.

6. The auxiliary device according to claim 5, wherein the adjustment slot comprises an elongate slot.

7. The auxiliary device according to claim 5, wherein the adjustment slot has an inner wall that forms a plurality of positioning mechanisms.

8. The auxiliary device according to claim 5, wherein the fastener comprises a pin.
